# EUROPEAN PATENT SPECIFICATION

(11) **EP 3 698 318 B1**
(45) Date of publication and mention of the grant of the patent: **20.04.2022**
(21) Application number: 18785648.9
(22) Date of filing: 18.10.2018
(51) Int. Cl.: G06T 7/00, G06T 7/162

(54) **SEGMENTING AN IMAGE**
SEGMENTIERUNG EINES BILDES
SEGMENTATION D'UNE IMAGE

(30) Priority: 20.10.2017 EP 17197610
(43) Date of publication of application: 26.08.2020
(73) Proprietor: Koninklijke Philips N.V., 5656 AG Eindhoven (NL)
(72) Inventor: RADICH, Dmitry, 5656 AE Eindhoven (NL)
(74) Representative: Philips Intellectual Property & Standards
(86) International application number: PCT/EP2018/078484
(87) International publication number: WO 2019/077018

(56) References cited:
- US-A1- 2008 310 716
- US-A1- 2013 077 842
- ALI KEMAL SINOP ET AL: "A Seeded Image Segmentation Framework Unifying Graph Cuts And Random Walker Which Yields A New Algorithm", 2013 IEEE INTERNATIONAL CONFERENCE ON COMPUTER VISION, 1 October 2007 (2007-10-01), pages 1-8, XP055427737, ISSN: 1550-5499, DOI: 10.1109/ICCV.2007.4408927
- Wiktionary: "abut - Wiktionary", , 22 November 2018 (2018-11-22), pages 1-4, XP055526240, Retrieved from the Internet: URL:https://en.wiktionary.org/wiki/abut [retrieved on 2018-11-22]
- Anonymous: "ABUT | meaning in the Cambridge English Dictionary", , 18 November 2021 (2021-11-18), XP055863185, Retrieved from the Internet: URL:https://dictionary.cambridge.org/dicti onary/english/abut?q=ABUT [retrieved on 2021-11-18]
- Anonymous: "abut verb - Definition, pictures, pronunciation and usage notes | Oxford Advanced Learner's Dictionary at OxfordLearnersDictionaries.com", , 18 November 2021 (2021-11-18), XP055863187, Retrieved from the Internet: URL:https://www.oxfordlearnersdictionaries .com/definition/english/abut?q=abut [retrieved on 2021-11-18]

## Description

### TECHNICAL FIELD OF THE INVENTION

This disclosure relates to the field of image processing and, in particular, to a method and system for segmenting an image comprising one or more anatomical structures into segments.

### BACKGROUND TO THE INVENTION

Segmentation is often used in image processing to divide (or segment) an image into segments. Each segment corresponds to a region in the image and this can help with image analysis. Segmentation is often used in medical imaging whereby computer-implemented methods may be used to automatically (or semi-automatically) extract and analyse anatomical features in medical images.

There are many different methods of segmentation, including graph partitioning methods and region-growing methods. These methods take a seed or starting position in the image as an indication of a portion of a structure of interest. The seeds are then used to split the image into segments corresponding to each structure in the image (one for each seed group). Successful segmentation therefore requires correctly designated regions (e.g. correctly indicated seed points) that the original volume of interest (VOI) should be segmented into. In some methods, a user indicates areas that belong to the different segments that the VOI will be divided into. The indication is often given by marking regions (or points) in the image that belong to the different structures. These regions are translated to groups of seed points in the image and are then fed into the segmentation algorithm.

There are many methods to define seed point groups. Commonly in these methods, the user marks up areas on each separate structure with a brush-like tool on the image, and the marked areas are converted into groups of seed points. This may be inefficient for the user however and error prone. Furthermore, the accuracy of the results can depend on the locations of the areas marked by the user (e.g. the locations of the provided seed points). As such, existing methods of placing seed points may be unintuitive and cumbersome and may not result in optimally placed seed points. There is thus a need for methods and systems that overcome these problems.

US 2013/0077842 describes preoperative resection planning, whereby a user inputs one or more polylines on one or more two-dimensional views. The polylines are used to assign resection and remnant seeds with a band of unassigned locations.

### SUMMARY OF THE INVENTION

As noted above, there are various challenges associated with segmenting an image comprising one or more anatomical structures into segments.

Therefore according to a first aspect, there is provided a system configured for segmenting an image comprising one or more anatomical structures into segments, using the features of claim 1.

The above system is based on the realisation that, the closer the seed point groups are to the lines along which the segments are supposed to be cut, the better the segmentation process works. Thus it is realized that, the most effective placement of the seed points is on either side of the line along which the image is to be cut, e.g. as close to line as possible. By enabling a user to indicate a line in the image and defining regions either side of and abutting up to the line in this way, therefore, the methods and systems herein can provide more accurate results. Furthermore, the methods and systems herein provide a more intuitive approach for the user to placing seed points, which is similar to an actual cutting operation. In this way, the segmentation process is made more intuitive for the user and overall more accurate.

In some embodiments, causing the processor to determine a segment corresponding to an anatomical structure may comprise causing the processor to determine whether the region overlaps a portion of an anatomical structure in the image and use the overlapped portion of the anatomical structure as the seed for determining the segment.

In some embodiments, the image may comprise a plurality of image components and causing the processor to determine a segment corresponding to an anatomical structure may comprise causing the processor to use each image component in the overlapped portion of the anatomical structure as a seed point for determining the segment.

In some embodiments, the image may comprise a plurality of image components and causing the processor to determine a segment corresponding to an anatomical structure may comprise causing the processor to use each image component in the region having a value within a predefined range as a seed point for determining the segment.

In some embodiments, causing the processor to determine a segment corresponding to the anatomical structure may comprise causing the processor to determine the segment using a graph cut segmentation process.

In some embodiments, each region may comprise a band lying parallel to the line, wherein the parallel bands are symmetrical.

In some embodiments, the set of instructions, when executed by the processor, may further cause the processor to receive a second user input indicating a change in width of at least one of the regions and adjust the width of the at least one region according to the received second user input.

In some embodiments, the second user input may comprise a movement of an actuator or a movement on a touch screen and the width of the at least one region is changed in proportion to the magnitude of the movement of the actuator or the movement on the touchscreen.

In some embodiments, the first user input may comprise the locations of two or more points on the image and the set of instructions, when executed by the processor, may cause the processor to determine a spline through the two or more points. Causing the processor to define two regions in the image may comprise causing the processor to define two regions in the image, one on either side of the determined spline, wherein the regions are placed directly either side of and abutting up to the indicated spline on their respective sides .

In some embodiments, the spline may comprise a Bezier spline.

In some embodiments, the line may comprise a plurality of adjustable control points and the set of instructions, when executed by the processor, may further cause the processor to receive a third user input to adjust one or more of the adjustable control points and update the shape of the line based on the adjustment indicated in the received third user input.

In some embodiments, the set of instructions, when executed by the processor may further cause the processor to receive a fourth user input indicating another line in the image, define two further regions in the image, one on either side of the other line, each further region abutting the other line on its respective side, link each of the two regions with a further region and, for each of the two regions, determine a segment corresponding to an anatomical structure comprised in both the region and the linked further region, using both the region and the linked further region as seed points for determining the segment.

In some embodiments, the set of instructions, when executed by the processor may further cause the processor to control a user interface to display the image, the line and the two regions, change the perspective of the image and change the perspective of the line and the two regions, in accordance with the change of perspective of the image.

In some embodiments, the set of instructions, when executed by the processor, may further cause the processor to repeatedly receive a first user input, define two regions in the image and, for each of the two regions, determine a segment corresponding to an anatomical structure, on an image of a determined segment, to divide the determined segment into further segments.

According to a second aspect, there is a computer-implemented method of segmenting an image comprising one or more anatomical structures into segments, using the features of claim 11.

According to a third aspect, there is provided a computer program product comprising a computer readable medium, the computer readable medium having computer readable code embodied therein, the computer readable code being configured such that, on execution by a suitable computer or processor, the computer or processor is caused to perform the method of claim 11 .

There is thus provided an improved method and system for segmenting an image comprising one or more anatomical structures into segments.

### BRIEF DESCRIPTION OF THE DRAWINGS

For a better understanding of the embodiments, and to show more clearly how they may be carried into effect, reference will now be made, by way of example only, to the accompanying drawings, in which:
Figure 1 is a block diagram of a system for segmenting an image comprising one or more anatomical structures into segments according to an embodiment;
Figure 2 illustrates an example image according to an embodiment;
Figure 3 illustrates a schematic example of an image, an indicated line and two defined regions according to an embodiment;
Figure 4 illustrates an example image whereby image components within a predefined range are highlighted to a user according to an embodiment;
Figures 5a, b and c illustrate an example embodiment whereby a line is indicated by a user in a first plane of a three-dimensional image and another line is indicated in a second plane of the three-dimensional image according to an embodiment;
Figures 6a, b and c indicate how the width of the regions can be adjusted according to an embodiment;
Figure 7 indicates output segments, each segment corresponding to a different anatomical structure in the image, according to an embodiment;
Figure 8 illustrates a computer-implemented method for segmenting an image comprising one or more anatomical structures into segments according to an embodiment; and
Figure 9 illustrates a computer-implemented method for segmenting an image comprising one or more anatomical structures into segments according to a further example embodiment.

### DETAILED DESCRIPTION OF THE EMBODIMENTS

As noted above, there is provided an improved method and system for segmenting an image comprising one or more anatomical structures into segments, which overcomes the existing problems.

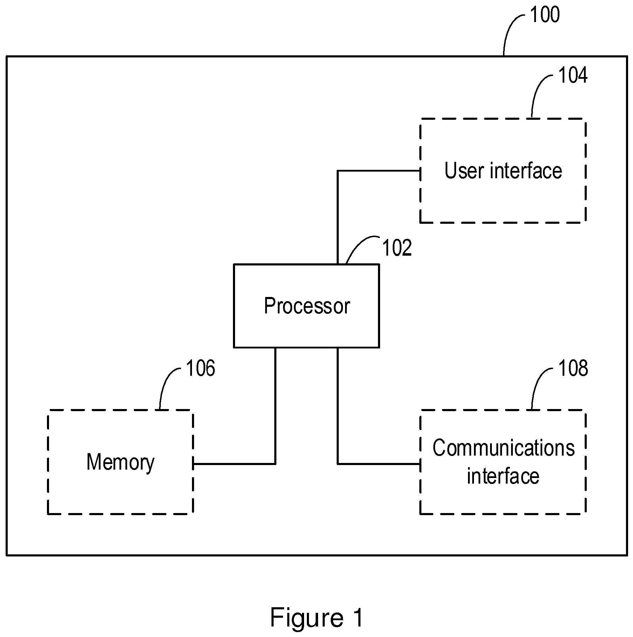

**Figure 1** shows a block diagram of a system 100 according to an embodiment that can be used for segmenting an image (e.g. such as a medical image) comprising one or more anatomical structures into segments. With reference to Figure 1, the system 100 comprises a processor 102 that controls the operation of the system 100 and that can implement the method described herein.

The system 100 further comprises a memory 106 comprising instruction data representing a set of instructions. The memory 106 may be configured to store the instruction data in the form of program code that can be executed by the processor 102 to perform the method described herein. In some implementations, the instruction data can comprise a plurality of software and/or hardware modules that are each configured to perform, or are for performing, individual or multiple steps of the method described herein. In some embodiments, the memory 106 may be part of a device that also comprises one or more other components of the system 100 (for example, the processor 102 and/or one or more other components of the system 100). In alternative embodiments, the memory 106 may be part of a separate device to the other components of the system 100.

In some embodiments, the memory 106 may comprise a plurality of sub-memories, each sub-memory being capable of storing a piece of instruction data. In some embodiments where the memory 106 comprises a plurality of sub-memories, instruction data representing the set of instructions may be stored at a single sub-memory. In other embodiments where the memory 106 comprises a plurality of sub-memories, instruction data representing the set of instructions may be stored at multiple sub-memories. For example, at least one sub-memory may store instruction data representing at least one instruction of the set of instructions, while at least one other sub-memory may store instruction data representing at least one other instruction of the set of instructions. Thus, according to some embodiments, the instruction data representing different instructions may be stored at one or more different locations in the system 100. In some embodiments, the memory 106 may be used to store images, information, data, signals and measurements acquired or made by the processor 102 of the system 100 or from any other components of the system 100.

The processor 102 of the system 100 can be configured to communicate with the memory 106 to execute the set of instructions. The set of instructions, when executed by the processor may cause the processor to perform the method described herein. The processor 102 can comprise one or more processors, processing units, multi-core processors and/or modules that are configured or programmed to control the system 100 in the manner described herein. In some implementations, for example, the processor 102 may comprise a plurality of (for example, interoperated) processors, processing units, multi-core processors and/or modules configured for distributed processing. It will be appreciated by a person skilled in the art that such processors, processing units, multi-core processors and/or modules may be located in different locations and may perform different steps and/or different parts of a single step of the method described herein.

Returning again to Figure 1, in some embodiments, the system 100 may comprise at least one user interface 104. In some embodiments, the user interface 104 may be part of a device that also comprises one or more other components of the system 100 (for example, the processor 102, the memory 106 and/or one or more other components of the system 100). In alternative embodiments, the user interface 104 may be part of a separate device to the other components of the system 100.

A user interface 104 may be for use in providing a user of the system 100 (for example, a medical personnel, a healthcare provider, a healthcare specialist, a care giver, a subject, or any other user) with information resulting from the method according to embodiments herein. The set of instructions, when executed by the processor 102 may cause processor 102 to control one or more user interfaces 104 to provide information resulting from the method according to embodiments herein. Alternatively or in addition, a user interface 104 may be configured to receive a user input. In other words, a user interface 104 may allow a user of the system 100 to manually enter instructions, data, or information. The set of instructions, when executed by the processor 102 may cause processor 102 to acquire the user input from one or more user interfaces 104.

A user interface 104 may be any user interface that enables rendering (or output or display) of information, data or signals to a user of the system 100. Alternatively or in addition, a user interface 104 may be any user interface that enables a user of the system 100 to provide a user input, interact with and/or control the system 100. For example, the user interface 104 may comprise one or more switches, one or more buttons, a keypad, a keyboard, a mouse, a mouse wheel, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces.

In some embodiments, as illustrated in Figure 1, the system 100 may also comprise a communications interface (or circuitry) 108 for enabling the system 100 to communicate with interfaces, memories and/or devices that are part of the system 100. The communications interface 108 may communicate with any interfaces, memories and devices wirelessly or via a wired connection.

It will be appreciated that Figure 1 only shows the components required to illustrate this aspect of the disclosure and, in a practical implementation, the system 100 may comprise additional components to those shown. For example, the system 100 may comprise a battery or other power supply for powering the system 100 or means for connecting the system 100 to a mains power supply.

In more detail, as noted above, the memory 106 comprises instruction data representing a set of instructions. Briefly, the set of instructions, when executed by the processor 102 of the system 100 cause the processor 102 to receive a first user input indicating a line in the image and define two regions in the image, one on either side of the indicated line, wherein the regions are placed directly either side of and abutting up to the indicated line on their respective sides. For each of the two regions, the set of instructions, when executed by the processor 102 of the system 100 further cause the processor to determine a segment corresponding to an anatomical structure comprised in the region, using the region as a seed for determining the segment.

As noted briefly above, the system herein is based on the realisation that the closer the seed point groups are to the lines along which the segments are to be cut, the better the segmentation process works. Thus, it is realised that the most effective placement of the seed points is on either side of the line along which the image is to be cut, e.g. as close to said line as possible. Therefore, by enabling a user to indicate a line in the image and defining regions either side of, and abutting up to, the indicated line in this way, the methods and systems described herein provide a more accurate approach to placing seed points, which improves the segmentation results. Furthermore, the process is made more intuitive to the user as it is similar to an actual cutting operation. Also, less user input may also be required compared to, for example, methods whereby the user shades in portions of each anatomical structure to be segmented.

In any of the embodiments described herein, the image can be a two-dimensional image, a three-dimensional image, or any other dimensional image. In some embodiments, the image may comprise a multi-planar reconstructed (MPR) image. The image may comprise a plurality of image components. In embodiments where the image is a two-dimensional image, the image components are pixels. In embodiments where the image is a three-dimensional image, the image components are voxels.

The image can, for example, be a medical image, or any other type of image comprising one or more anatomical structures. The image may be acquired using any imaging modality. Examples of medical image modalities include, but are not limited to, a computed tomography (CT) image or CT volume (for example, from a CT scan) such as a C-arm CT image, a spectral CT image or a phase contrast CT Image, an x-ray image (for example, from an x-ray scan), a magnetic resonance (MR) image (for example, from an MR scan), an ultrasound (US) image (for example, from an ultrasound scan), fluoroscopy images, nuclear medicine images, or any other image comprising one or more anatomical structures. Although examples have been provided for the type of image, a person skilled in the art will appreciate that the teachings provided herein may equally be applied to any other type of image comprising one or more anatomical structures.

As mentioned earlier, the image comprises one or more anatomical structures. For example, the image may comprise one or more organs (such as a heart, one or more lungs, or any other organ, or any combination of organs), bones (such as one or more rib bones, one or more vertebrae or any other bones, or any combination of bones), and/or any other type of anatomical structure. Herein, "anatomical structure" is used generally and may refer to a group of anatomical structures (e.g. a group of organs), one or more individual anatomical structures (e.g. an individual organ) and/or one or more portions of an anatomical structure (e.g. one or more portions of an organ). It will therefore be appreciated that the image may not necessarily comprise an entire anatomical structure and may, for example, only comprise part of an anatomical structure and/or, if other anatomical structures are also present in the segmented image, part(s) of the other anatomical structures.

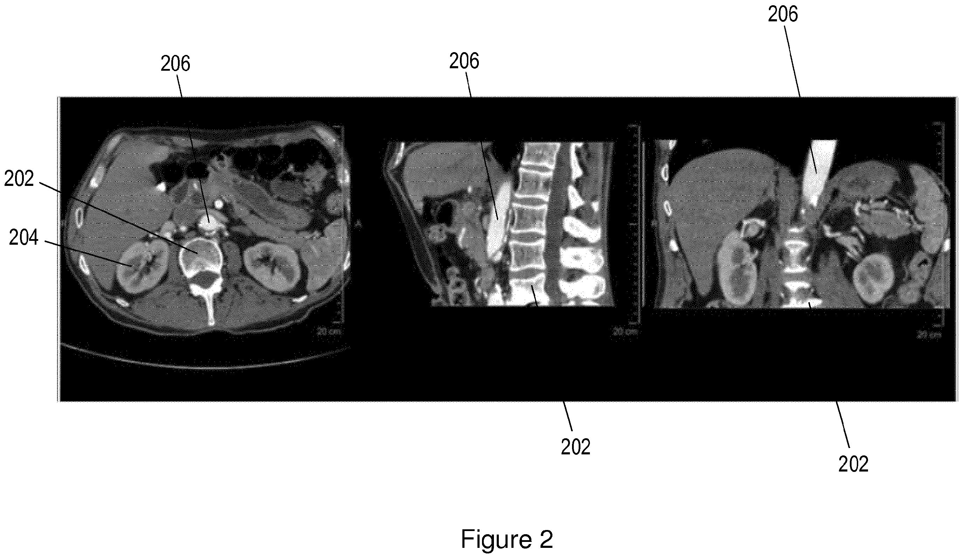

**Figure 2** illustrates an example image comprising one or more anatomical structures. In this embodiment, the example image comprises a multi-planar reconstructed (MPR) image and the one or more anatomical structures comprise structures in a mid-section of a subject. In particular, the image shows vertebrae 202, the kidneys 204 and the aorta 206.

As mentioned earlier, the system described herein can be used for segmenting an image. The person skilled in the art will be familiar with segmentation and different types of segmentation processes. Briefly, segmentation is where an image is segmented (or divided, converted or partitioned) into a plurality of different segments (or portions, blocks, or shapes). For example, each segment may correspond to a group of image components that are related in some way (e.g. all image components that lie within a boundary, predefined area or region), or share a common characteristic (e.g. connected image components having values within a predefined range). Segmentation may be used to delineate or highlight parts of an anatomical structure in the image, shapes in the image and/or other objects that have identifiable outlines (e.g. boundaries or edges) in the image. The segmentation process may be a computer-implemented segmentation process (e.g. an "auto-segmentation" algorithm that automatically segments images for the user). Examples of computer-implemented segmentation processes include, for example, graph partitioning methods (examples of graph partitioning methods include normalized cuts, random walker, minimum cut, isoperimetric partitioning, and segmentation-based object categorization) and region-growing methods, and the person skilled in the art will be familiar with such segmentation processes, amongst others.

As described above, certain segmentation processes require seed points to be provided by the user. The seed points provide an indication of the location of a portion of (each) structure (e.g. anatomical structure) in the image for which a segment is to be determined. In segmentation processes such as graph based processes, the accuracy of the outputted segments depends in part on the location of the provided seed points. It has been recognised herein, that when two anatomical structures are close together in an image, the closer the seed points are to the line (e.g. dividing line) between the structures, along which the segments are to be cut, the better the algorithm works. It is realized that the most effective placement of seed points where two structures are closely placed is directly either side of the line along which the structures are to be cut, e.g. as close to the dividing line as possible.

As such, herein, the set of instructions, when executed by the processor 102, cause the processor 102 to receive a first user input indicating a line in the image. The user may provide the first user input, for example, using a user interface 104. In some embodiments, the first user input comprises the locations of two or more points on the image through which a line is to be placed. The user may indicate the two or more points on the image, for example, using a user interface 104 (such as a mouse and by clicking on the image using the mouse to indicate the locations of each of the points). In some embodiments, the set of instructions, when executed by the processor 102, may cause the processor 102 to determine (e.g. fit) a line through the two or more points. The skilled person will be familiar with different methods that can be used to fit a line between points in an image. For example, in some embodiments, the processor 102 may be caused to determine (e.g. fit) a spline through the two or more points. In some embodiments, the spline may be a Bezier spline. Although examples have been given for the way in which a line can be fitted between points, the person skilled in the art will appreciate that these examples are non-exhaustive and that other line fitting methods may also be used (for example, a least squares fitting method and/or one or more other curve fitting methods).

In general, the first user input indicates a line in the image that divides two anatomical structures in the image, which are to be segmented into segments (e.g. two segments, one for each anatomical structure on either side of the line).

In some embodiments, the line (or, for example, where a spline is determined, the determined spline) may comprise a plurality of adjustable control points. The adjustable control points may be adjustable by the user (e.g. by dragging and dropping) in order to reposition (for example, to better place) the line over the optimal cut point (e.g. the line along which the structures are to be cut) in the image. In some embodiments, the set of instructions, when executed by the processor 102 may further cause the processor 102 to receive a third user input to adjust one or more of the adjustable control points and update the shape of the line based on the adjustment indicated in the received third user input. Adjusting a control point may comprise, for example, adding a control point, removing a control point and/or moving a control point so as to change the shape of the line (or spline). In embodiments where a spline is determined, the spline may comprise a plurality of adjustable control points and the third user input to adjust a control point may cause the processor 102 to re-determine a new spline that fits to the adjusted control points.

As noted above, the set of instructions, when executed by the processor 102, further cause the processor 102 to define two regions in the image, one on either side of the indicated line, wherein the regions are placed directly either side of and abutting up to the indicated line on their respective sides. In embodiments where the line comprises a spline, being caused to define two regions, one on either side of the line may comprise being caused to define two regions in the image, one on either side of the determined spline, wherein the regions are placed directly either side of and abutting up to the indicated spline on their respective sides.

In some embodiments, each region may comprise a band that lies parallel to (e.g. along the length of) the line (or spline). In some embodiments, the parallel bands may be symmetrical. In some embodiments, therefore, the regions may be shaped as "ribbons" lying either side of the indicated line (or spline).

Therefore in some embodiments, the two regions may appear as a pair of stripes, one stripe on either side of the indicated line (or spline).

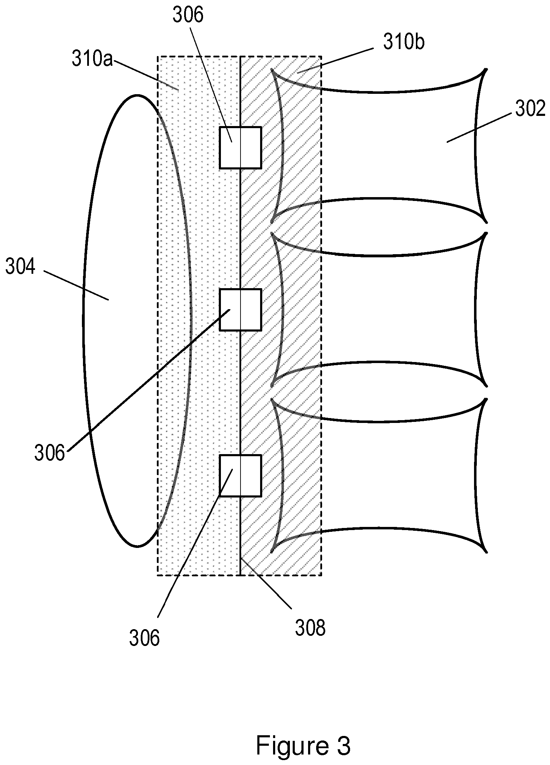

**Figure 3** shows a schematic representation of an embodiment in which this is illustrated. In this embodiment, an image comprises anatomical structures, namely vertebrae 302 and a kidney 304. In the embodiment of Figure 3, the image is to be segmented into a first segment comprising the vertebrae 302 and a second segment comprising the kidney 304. To this end, the user provides a first user input that is received by the processor 102 in the form of three points 306. The set of instructions when executed by the processor 102, may cause the processor 102 to determine a line 308 (such as a spline) through the three points and defines two regions 310a and 310b in the image, one on either side of the determined line 308. As can be seen in Figure 3, the two regions in this embodiment lie either side of the determined spline. Each region comprises a band that lies parallel to, and abuts up to, the determined line 308.

Turning back now to Figure 1, in some embodiments, the set of instructions, when executed by the processor 102, may further cause the processor 102 to receive a second user input (for example from a user interface 104) indicating a change in width of at least one of the regions and to adjust the width of the at least one region according to the received second user input. For example, in some embodiments, a second user input may be received from an actuator (e.g. a mechanism or component that a user can push or pull, such as a wheel on a computer mouse or a button on a joystick). More specifically, the second user input may comprise a movement of an actuator. For example, in some embodiments, the user may hover over the line (or spline) and move the actuator to change the width of the defined regions. In alternative embodiments, a second user input may comprise (or be received in the form of) a movement on a touch screen (e.g. a swipe on a touch screen). The set of instructions when executed by the processor 102, may cause the processor 102 to adjust the width of the at least one region in proportion to the magnitude of the movement of the actuator or the movement on the touchscreen (e.g. based on the magnitude of the received second user input). Adjusting a width (e.g. expanding or contracting the width) of a region based on an input, e.g. from an actuator such as a mouse wheel or a touch screen movement, is more efficient than if the user manually draws a new region in the image. In this way, the process described herein is more user efficient and user friendly.

As mentioned earlier, the set of instructions, when executed by the processor 102, may cause the processor 102 to determine, for each of the two regions, a segment corresponding to an anatomical structure comprised in the region, using the region as a seed for determining the segment.

In some embodiments, each region may be used as a seed for a segment in the segmentation. For example, each image component (e.g. each pixel or voxel) may be used as a seed point for determining the segment. In some embodiments, the coordinates of each image component in a region may be used as a seed point for determining the segment. Using the full region as a seed point may be appropriate, for example, where the edge of the anatomical structure lies along (or very close to) the line (or spline).

In some embodiments, a subset of the image components in a region may be used as seed points (or a seed point group) with which to determine the segment. For example, in some embodiments, the set of instructions, when executed by the processor 102 may cause the processor 102 to determine whether the region overlaps a portion of an anatomical structure in the image and use the overlapped portion of the anatomical structure as the seed for determining the segment. For example, in the example in Figure 3, the portion of the region 310a overlapping the kidney 304 may be used as a seed region with which to segment the kidney 304 and the portions of the region 310b that overlap the vertebrae 302 may be used as seed regions to segment the vertebrae 302. In some embodiments, the set of instructions, when executed by the processor 102, may cause the processor 102 to use each image component in the overlapped portion of the anatomical structure as a seed point for determining the segment. In this way, only image components in the region that form part of an anatomical structure of interest are used as seed points with which to determine a segment for the anatomical structure.

In some embodiments, the processor 102 may be caused to use each image component in the region having a value within a predefined range as a seed point for determining the segment. The predefined range may be chosen, for example, as (e.g. to coincide with) the range of image component values observed for a specific anatomical structure in the image. For example, if in Figure 3, image components corresponding to the kidney had numerical values between x1 and x2, the predetermined range may be set to encompass the values x1 and x2 so as to pick out the image components in the region 310a corresponding to the kidney 304. In this way, the predetermined range can be used to target specific anatomical structures within the region(s) to create appropriate seeds for the segmentation.

In some embodiments, image components with values lying within the predefined range may be determined (e.g. located) in a pre-processing stage. For example, in some embodiments, the processor 102 may cause the image to be displayed to the user, for example, by controlling a user interface 104 to display the image. Image components with values within the predetermined range may be highlighted to the user, for example in a different colour to other image components in the image.

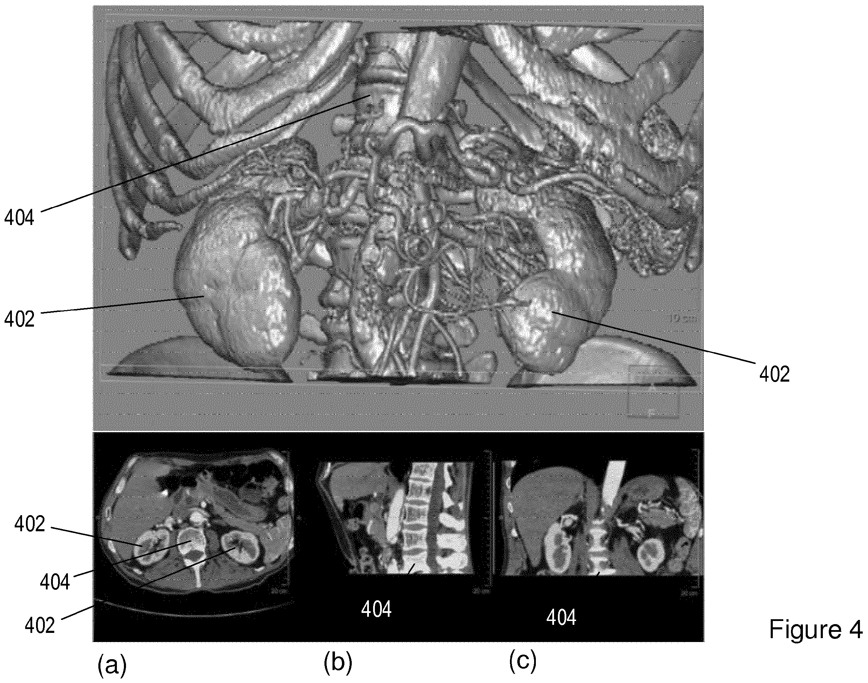

**Figure 4****,** shows an embodiment in which this is illustrated. In this embodiment, the image comprises an image of the torso comprising anatomical structures, namely kidneys 402 and vertebrae 404. Image components within a predetermined range corresponding to the values of the kidneys 402 and vertebrae 404 are highlighted (e.g. appear brighter) to the user in Figures 4a, 4b and 4c. The user can thus more easily view the anatomical structures in the image to provide a user input to the processor 102, to provide an indication of a line in the image along which the highlighted anatomical structures should be split (or cut).

The image may be segmented using any appropriate segmentation process that takes seed points as input. In some embodiments, causing the processor 102 to determine a segment corresponding to the anatomical structure may comprise causing the processor 102 to determine the segment using a graph cut segmentation process. In alternative embodiments, causing the processor 102 to determine a segment corresponding to the anatomical structure may comprise causing the processor 102 to determine the segment using a region growing segmentation process. Although examples of suitable segmentation processes have been provided, it will be understood that any other segmentation processes that take seed points as starting points from which to determine the locations of segments may also be used to determine the segments.

In some embodiments, the set of instructions, when executed by the processor 102, may further cause the processor 102 to control a user interface (such as a user interface 104) to display the image, the line and the two regions. The processor 102 may further be caused to change the perspective of the image (for example, to rotate or translate the image, flip the image, or zoom-in or zoom out from the image). The processor 102 may be further caused to change the perspective of the displayed line and the two regions, in accordance with the change of perspective of the image. For example, if the image is rotated, the displayed line and the displayed regions may be similarly rotated so that they stay fixed in the image with respect to the displayed anatomical structures. In this way, the user can view the image from different angles and perspectives. This can, for example, be useful for the user to check the accuracy of the placement of the line and the regions in the image, from different angles and perspectives before the image is segmented.

In some embodiments, the set of instructions, when executed by the processor 102, may further cause the processor 102 to repeatedly: i) receive a first user input indicating a line in the image; ii) define two regions in the image, one on either side of the indicated line, each region abutting the indicated line on its respective side; and iii) determine, for each of the two regions, a segment corresponding to an anatomical structure comprised in the region, using the region as a seed for determining the segment; on an image of a determined segment, to divide the determined segment into further segments. For example, an image may be segmented into two segments, each segment corresponding to a different anatomical structure in the image. The user may concentrate on one of the two segments and segment this segment further (e.g. into further segments or subsegment) using any of the processes described with respect to the processor 102 above. In this way, the user can sequentially break an image down by cutting (or dividing) the image up into progressively smaller segments, each iteration dividing the chosen segment into two.

In some embodiments, the set of instructions, when executed by the processor 102, may further cause the processor 102 to receive a fourth user input indicating another (e.g. second) line in the image. The other line may be indicated by the fourth user input in the same way as the indicated line was indicated by the first user input (which may be thought of as e.g. the "first" line), as described in any of the embodiments above. The set of instructions, when executed by the processor 102, may further cause the processor 102 to define two further regions in the image, one on either side of the other indicated line, each further region abutting the other (e.g. second) indicated line on its respective side. Each region either side of the indicated line (e.g. first indicated line) may be linked (or associated) with one of the two further regions defined either side of the other indicated line. For each linked pair of regions (e.g. one associated with the indicated line and one associated with the other line), the processor 102 may be caused to determine a segment corresponding to an anatomical structure comprised in both the region and the linked further region, using both the region and the linked further region as seed points for determining the segment. In this way, one of the regions determined for the indicated line and one of the further regions determined for the other line can both be used as seed points for segmenting the same anatomical structure. As such, the user may indicate more than one line (e.g. cut) in the image, to more clearly define how two anatomical structures are separated in the image.

In some embodiments, where the image is a three dimensional image, the user may indicate the line in a first slice through a three dimensional image and the other line in a second, different slice through the three dimensional image. The first and second slices may be in different dimensions of the three dimensional image, for example, the indicated line may lie in a plane that is perpendicular to the plane in which the other indicated line lies. This is merely exemplary however and the skilled person will appreciate that the line and the other line may be drawn in any planes or combination of planes in a three dimensional image.

As noted above, each region determined either side of the indicated line may be linked (or associated) with a further region determined with respect of the other indicated line and both the region defined with respect to the line and the linked further region defined with respect to the other line may be used as seed points for determining an anatomical structure comprised in the region and the linked further region. In some embodiments, the regions determined either side of the indicated line and the further regions determined either side of the other line may be colour coded to indicate to the user which region is linked with which further region (and thus which regions and further regions will be used as seed points for an anatomical structure in the image). In some embodiments, the user may be able to change (e.g. flip) the links (or associations) to ensure that each indicated region and linked further indicated region overlap with the same anatomical structure in the image. Although examples have been given for the way in which more than one line may be indicated in the image and used to segment the image, the skilled person will appreciate that other processes are also possible. For example, the user may be permitted to indicate any number of lines (e.g. three or more) in the image from which linked regions may be defined to use as seed points for determining segments in the image. In this way, the user is able to easily provide seed points for segmenting anatomical structures in more than one dimension in the image.

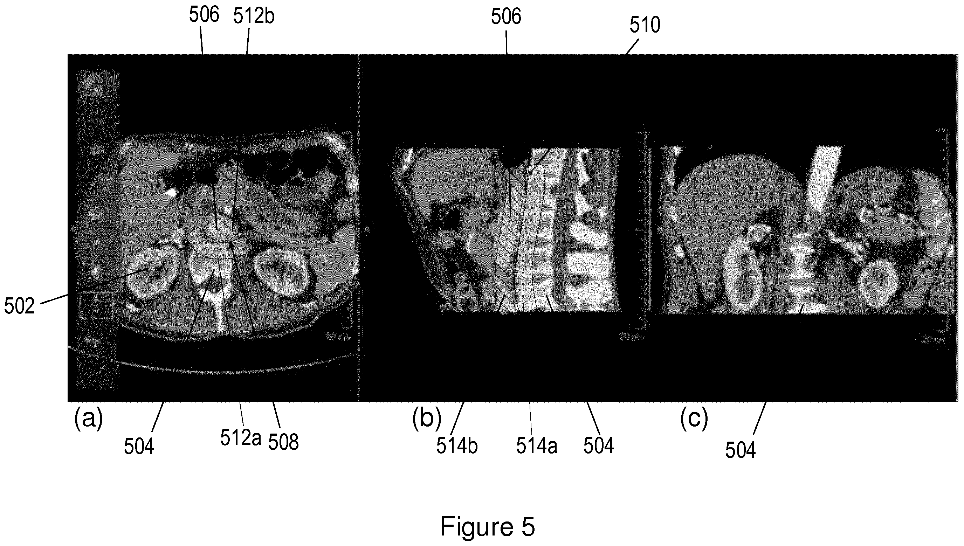

**Figures 5****,** **6** **and** **7** illustrate an embodiment in which this is illustrated, whereby a three dimensional image of a midsection is segmented into two segments, one corresponding to the kidneys and the vertebrae and a second corresponding to the aorta. Figures 5a, b and c show three planes through the three dimensional image. In this embodiment, image components having values within a predetermined range of values that correspond to a range of values for the kidneys 502, vertebrae 504 and aorta 506 are highlighted to the user (this is indicated by the brighter portions of Figure 5). The user indicates a line 508 in the first plane shown in Figure 5a separating the aorta 506 and vertebrae 504 in that plane and indicates another line 510 in the second plane shown in Figure 5b separating the aorta 506 and vertebrae 504 in the second plane.

Two regions 512a (indicated by the spotted region) and 512b (indicated by the dashed region) are defined either side of the indicated line 508 and a further two regions 514a (indicated by the spotted region in Figure 5b) and 514b (indicated by the dashed region in Figure 5b) are defined either side of the other indicated line 510. The indicated region 512a in Figure 5a overlapping the vertebrae and the further indicated region 514a overlapping the vertebrae 504 in Figure 5b are linked such that both regions overlapping the vertebrae 504 are used as seed points to segment the vertebrae 504. Similarly, the indicated region 512b overlapping the aorta and the further indicated region 514b overlapping the aorta 506 are linked such that both regions overlapping the aorta 506 are used as seed points to segment the aorta 506. In this embodiment, the linked regions are colour coded (e.g. regions overlapping the aorta 506 are colour coded a first colour and the regions overlapping the vertebrae 504 are coloured a second colour, where the first colour and the second colour is different) to highlight to the user which regions are used as seed points for which anatomical structures. The user may change which region links up to which further region, if for example, a region overlapping the aorta 506 is inadvertently linked with a region overlapping the vertebrae 504, so as to ensure that linked regions overlap the same structures.

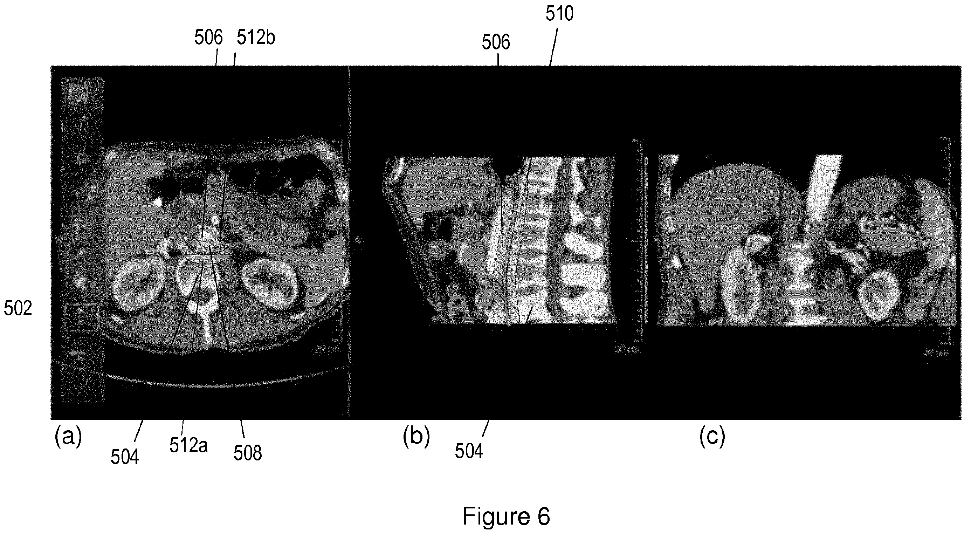

**Figures 6a****, b and c** show the same image process as in Figure 5, except in this embodiment, a second user input is received (e.g. a movement of a mouse wheel) to indicate that the widths of the regions 512a and 512b either side of the indicated line 508 and the other indicated line 510 should be reduced in size to better overlap the aorta 506 and the vertebrae 504 respectively. As such, the widths of the regions 512a and 512b are reduced accordingly (compared to Figure 5).

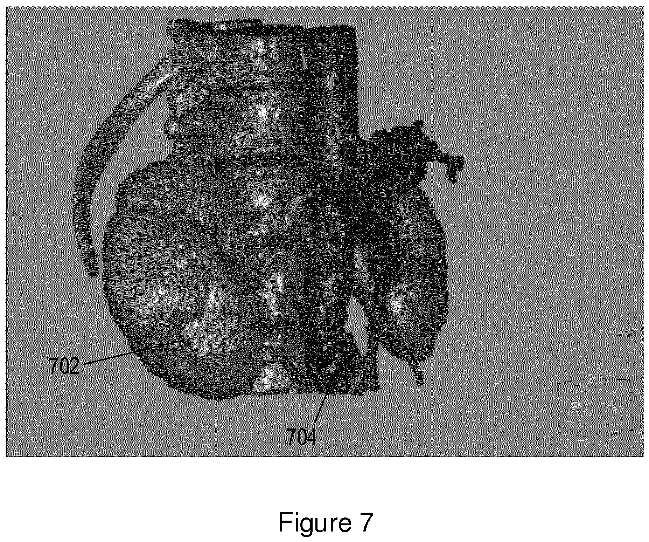

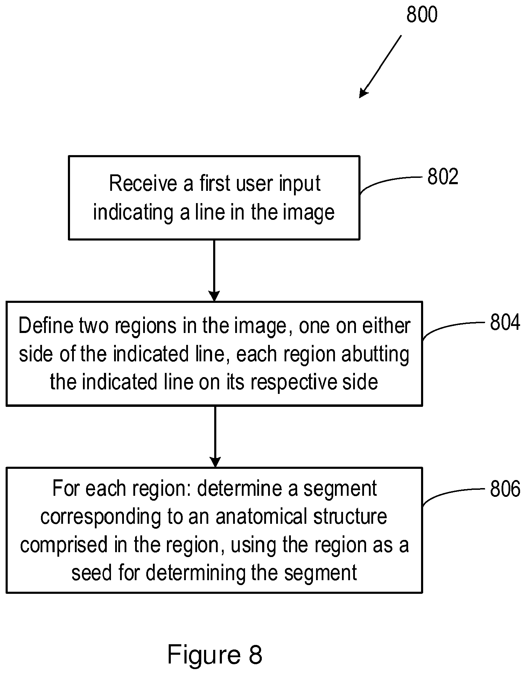

The image is then segmented using graph partition methods according to this illustrated embodiment, taking the linked pairs of indicated regions and further regions (512a and 514a and 512b and 514b respectively) as seed points to segment the vertebrae 504 and aorta 506 in the image. **Figure 7** shows the output of the segmentation process, showing the two segments that have been produced, one corresponding to the vertebrae, kidneys and associated structures 702 and the other to the aorta 704. In this way, an image can easily and accurately be segmented into two segments, with minimum user input. **Figure 8** illustrates a computer-implemented method 800 of segmenting an image comprising one or more anatomical structures into segments, according to an embodiment. The illustrated method 800 can generally be performed by or under the control of the processor 102 of the system 100. The method may be partially or fully automated according to some embodiments.

Briefly, with reference to Figure 8, the method 800 comprises receiving a first user input indicating a line in the image (at block 802 of Figure 8), and defining two regions in the image, one on either side of the indicated line, wherein the regions are placed directly either side of and abutting up to the indicated line on their respective sides (at block 804 of Figure 8). The method 800 also comprises, for each of the two regions: determining a segment corresponding to an anatomical structure comprised in the region, using the region as a seed for determining the segment (at block 806 of Figure 8).

As noted above, generally, the closer the seed point groups are to the lines along which the segments are to be cut, the better the segmentation process works. Thus, the most effective placement of the seed points is on either side of the line along which the image is to be cut, e.g. as close to line as possible. By enabling a user to indicate a line in the image and defining regions either side of and abutting up to the line in this way, the method of Figure 8 provides a more intuitive and accurate approach to placing seed points. Less user input may be required compared to, for example, methods whereby the user shades in portions of each anatomical structure to be segmented. Furthermore, the method herein is accurate than such shading methods.

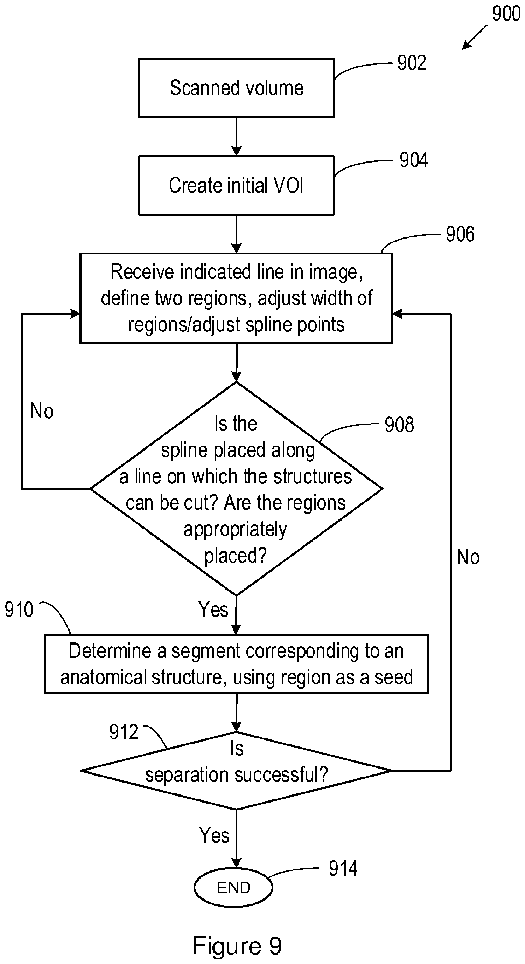

**Figure 9** shows a computer implemented method 900 according to another embodiment. The illustrated method 900 can generally be performed by or under the control of the processor 102 of the system 100. The method may be partially or fully automated according to some embodiments. In this illustrated embodiment, in a block 902, a scanned volume is received, such as an MPR image. In block 904 a volume of interest is specified. For example, the scanned volume may be reduced in size to focus the segmentation on a particular portion of the scanned volume.

In block 906, a first user input is received, indicating a line in the image. In this embodiment, the first user input indicates two or more points in the image and a line (e.g. a spline) is fit through the indicated points. Receiving a first user input in the form of two or more points and fitting a line through the points in this manner was described above with respect to system 100 and the details therein will be understood to equally apply to block 906. Block 906 further comprises defining two regions in the image, one either side of the indicated line, wherein the regions are placed directly either side of and abutting up to the indicated line on their respective sides. Block 906 may further comprise modifying the regions, for example, increasing the width of the region in response to a second user input. Block 906 may also further comprise representing the line with a series of control points, receiving a third user input indicating an adjustment to one of the control points, changing the control point and re-fitting (e.g. re-determining) a line passing through the adjusted control points.

Determining regions, changing the width of said regions in response to user input and adjusting the control points of a line were all described above with respect to system 100 and the details therein will be understood to equally apply to these aspects of block 906. Block 906 may further comprise receiving a fourth user input indicating another line in the image (for example, the fourth user input may comprise an indication of two or more other points in the image and another line (or spline) may be fit through the two or more other points, as described above with respect to the first user input.) Two further regions may be defined in the image, one either side of the other line, each further region abutting the other line on its respective side. Each of the two regions may then be linked with a further region (e.g. each region may be linked with a further region overlapping the same anatomical structure as that region). Receiving a fourth user input indicating another line, defining further regions either side of the other line and linking each region with a further region were all described above with respect to system 100 and the details therein will be understood to equally apply to these aspects of block 906.

In block 908, the user assesses whether the line (and/or the other line if a fourth user input is received in block 906) is correctly placed between the two structures that are to be segmented. In particular, the user assesses whether the line covers the intended separation region e.g. the line reflects the line along which the structures are to be cut (or separated) into two segments. The user then determines whether the defined regions (and/or the further defined regions) cover at least a portion of the anatomical structure of interest (e.g. that the regions can be used as seed points for the anatomical structures of interest). If the user determines that the line does not correctly align with the separation region (e.g. cut point between the two segments), or that one or both of the regions do not overlap with an anatomical structure of interest, then the method returns to block 906 whereby the user may provide further user inputs to adjust the positions of the line and/or the widths of the regions until the conditions of block 908 are satisfied.

If, at block 908, the user determines that the line correctly lies between the structures of interest (e.g. aligns with the separation region or cut point) and the regions overlap with the anatomical structure of interest (e.g. are appropriately placed), then the method moves on to block 910 which comprises, for each of the two regions, determining a segment corresponding to an anatomical structure comprised in the region, using the region as a seed for determining the segment. If a fourth input is received in block 906 indicating another line in the image, then at block 908, the method may (e.g. alternatively or additionally) comprise determining a segment corresponding to an anatomical structure comprised in both the region and the linked further region, using both the region and the linked further region as seed points for determining the segment. Determining a segment was described above with respect to system 100 and the details therein will be understood to equally apply to these aspects of block 910.

In block 912, the user assesses whether the segmentation (or separation) of the anatomical structures was successful. If the segmentation was unsuccessful, or the user is dissatisfied with the result, then the method returns to block 906 whereby, as described above, the user may adjust the position of the line and/or the width of the regions and re-run the segmentation.

If it is determined in block 912 that the segmentation was successful, then the method ends at block 914.

There is also provided a computer program product comprising a computer readable medium, the computer readable medium having computer readable code embodied therein, the computer readable code being configured such that, on execution by a suitable computer or processor, the computer or processor is caused to perform the method or methods described herein. Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A system (100) configured for segmenting an image comprising one or more anatomical structures into segments, the system (100) comprising:
a memory (106) comprising instruction data representing a set of instructions;
a processor (102) configured to communicate with the memory (106) and to execute the set of instructions, wherein the set of instructions, when executed by the processor (102), cause the processor (102) to:
receive a first user input indicating a line in the image;
define two regions in the image, one on either side of the indicated line, each region a butting the indicated line on its respective side; and
for each of the two regions:
determine a segment corresponding to an anatomical structure comprised in the region, using the region as a seed for determining the segment;
wherein the definition of the two regions in the image is
**characterized in that**
the regions are placed directly either side of and abutting up to the indicated line on their respective sides.

2. A system as in claim 1 wherein the image comprises a plurality of pixels or voxels and causing the processor to determine a segment corresponding to an anatomical structure comprises causing the processor to:
use each pixels or voxels in the region having a value within a predefined range as a seed point for determining the segment.

3. A system as in any one of the preceding claims wherein causing the processor to determine a segment corresponding to the anatomical structure comprises causing the processor to:
determine the segment using a graph cut segmentation process.

4. A system as in any one of the preceding claims wherein each region comprises a band lying parallel to the line, and wherein the parallel bands are symmetrical.

5. A system as in any one of the preceding claims wherein the set of instructions, when executed by the processor (102), further cause the processor (102) to:
receive a second user input indicating a change in width of at least one of the regions; and
adjust the width of the at least one region according to the received second user input.

6. A system as in claim 5 wherein the second user input comprises a movement of an actuator or a movement on a touch screen and the width of the at least one region is changed in proportion to the magnitude of the movement of the actuator or the movement on the touchscreen.

7. A system as in any one of the preceding claims wherein the first user input comprises the locations of two or more points on the image and the set of instructions, when executed by the processor (102), cause the processor (102) to:
determine a spline through the two or more points; and
wherein causing the processor to define two regions in the image comprises causing the processor to:
define two regions in the image, one on either side of the determined spline,
wherein the regions are placed directly either side of and abutting up to the determined spline on their respective sides.

8. A system as in any one of the preceding claims wherein the line comprises a plurality of adjustable control points; and wherein the set of instructions, when executed by the processor (102), further cause the processor (102) to:
receive a third user input to adjust one or more of the adjustable control points; and
update the shape of the line based on the adjustment indicated in the received third user input.

9. A system as in any one of the preceding claims wherein the set of instructions, when executed by the processor (102), further cause the processor (102) to:
receive a fourth user input indicating another line in the image;
define two further regions in the image, one on either side of the other line, each further region abutting the other line on its respective side;
associate each of the two regions with a further region; and
for each of the two regions:
determine a segment corresponding to an anatomical structure comprised in both the region and the associated further region, using both the region and the associated further region as seed points for determining the segment.

10. A system as in any one of the preceding claims wherein the set of instructions, when executed by the processor (102), further cause the processor (102) to:
control a user interface to display the image, the line and the two regions;
change the perspective of the image; and
change the perspective of the line and the two regions, in accordance with the change of perspective of the image.

11. A computer-implemented method of segmenting an image comprising one or more anatomical structures into segments, the method comprising:
receiving (802) a first user input indicating a line in the image;
defining (804) two regions in the image, one on either side of the indicated line,
each region abutting the indicated line on its respective side; and
for each of the two regions:
determining (806) a segment corresponding to an anatomical structure comprised in the region, using the region as a seed for determining the segment;
wherein the definition of the two regions in the image is **characterized in that**
the regions are placed directly either side of and abutting up to the indicated line on their respective sides.

12. A computer program product comprising a computer readable medium, the computer readable medium having computer readable code embodied therein, the computer readable code being configured such that, on execution by a suitable computer or processor, the computer or processor is caused to perform the method as claimed in claim 11.

## Patentansprüche

1. Ein System (100), das zum Segmentieren eines Bildes, das eine oder mehrere anatomische Strukturen umfasst, in Segmente konfiguriert ist, wobei das System (100) Folgendes umfasst:
einen Speicher (106) mit Befehlsdaten, die einen Satz von Befehlen darstellen;
einen Prozessor (102), der so konfiguriert ist, dass er mit dem Speicher (106) kommuniziert und den Satz von Befehlen ausführt, wobei der Satz von Befehlen,
wenn er von dem Prozessor (102) ausgeführt wird, den Prozessor (102) dazu veranlasst:
eine erste Benutzereingabe zu empfangen, die eine Linie im Bild angibt;
zwei Bereiche im Bild definiert werden, einer auf jeder Seite der angegebenen Linie, wobei jeder Bereich auf seiner Seite an die angegebene Linie anschließt und
für jeden der zwei Bereiche:
ein Segments bestimmt, das einer anatomischen Struktur entspricht, die in dem Bereich enthalten ist, wobei der Bereich als Ausgangspunkt für die Bestimmung des Segments verwendet wird;
wobei die Definition der beiden Bereiche im Bild
**dadurch gekennzeichnet ist,**
**dass** die Bereiche direkt beiderseits der angegebenen Linie platziert sind und auf ihren jeweiligen Seiten an diese anschließen.

2. System nach Anspruch 1, bei dem das Bild eine Vielzahl von Pixeln oder Voxeln umfasst und der Prozessor veranlasst wird, ein einer anatomischen Struktur entsprechendes Segment zu bestimmen, indem er veranlasst wird:
jedes Pixel oder Voxel in der Region mit einem Wert innerhalb eines vordefinierten Bereichs als Startpunkt für die Bestimmung des Segments zu verwenden.

3. System nach einem der vorhergehenden Ansprüche, wobei der Prozessor veranlasst wird, ein Segment zu bestimmen, das der anatomischen Struktur entspricht, indem er veranlasst wird, dass der Prozessor:
das Segment mit Hilfe eines Graph-Cut-Segmentierungsverfahrens bestimmt.

4. System nach einem der vorhergehenden Ansprüche, wobei jeder Bereich ein parallel zur Linie liegendes Band umfasst und wobei die parallelen Bänder symmetrisch sind.

5. System nach einem der vorangehenden Ansprüche, wobei der Satz von Befehlen, wenn er von dem Prozessor (102) ausgeführt wird, den Prozessor (102) außerdem veranlasst:
eine zweite Benutzereingabe zu empfangen, die eine Änderung der Breite von mindestens einem der Bereiche anzeigt; und
die Breite des mindestens einen Bereichs entsprechend der empfangenen zweiten Benutzereingabe anpasst.

6. System nach Anspruch 5, wobei die zweite Benutzereingabe eine Bewegung eines Aktuators oder eine Bewegung auf einem Touchscreen umfasst und die Breite des mindestens einen Bereichs proportional zur Größe der Bewegung des Aktuators oder der Bewegung auf dem Touchscreen geändert wird.

7. System nach einem der vorhergehenden Ansprüche, wobei die erste Benutzereingabe die Positionen von zwei oder mehr Punkten auf dem Bild umfasst und der Satz von Anweisungen, wenn er von dem Prozessor (102) ausgeführt wird, den Prozessor (102) veranlasst:
einen Spline durch die zwei oder mehr Punkte zu bestimmen; und
wobei das Veranlassen des Prozessors, zwei Bereiche in dem Bild zu definieren, das Veranlassen des Prozessors das Folgende umfasst:
Definieren zweier Bereiche im Bild, einen auf jeder Seite des bestimmten Splines, wobei die Bereiche direkt auf beiden Seiten des bestimmten Splines platziert sind und auf den jeweiligen Seiten an diesen anschließen.

8. System nach einem der vorhergehenden Ansprüche, wobei die Leitung eine Vielzahl von einstellbaren Steuerpunkten umfasst; und wobei der Satz von Befehlen, wenn er von dem Prozessor (102) ausgeführt wird, den Prozessor (102) außerdem veranlasst:
eine dritte Benutzereingabe zu empfangen, um einen oder mehrere der einstellbaren Kontrollpunkte einzustellen; und
die Form der Linie auf der Grundlage der in der empfangenen dritten Benutzereingabe angegebenen Anpassung zu aktualisieren.

9. System nach einem der vorhergehenden Ansprüche, wobei der Satz von Befehlen,
wenn sie von dem Prozessor (102) ausgeführt werden, den Prozessor (102) außerdem dazu veranlassen:
eine vierte Benutzereingabe zu empfangen, die eine weitere Linie auf dem Bild angibt;
zwei weitere Bereiche im Bild zu definieren, einen auf jeder Seite der anderen Linie, wobei jeder weitere Bereich auf seiner jeweiligen Seite an die andere Linie anschließt;
jede der beiden Bereiche mit einem weiteren Bereich zu verknüpfen; und für jeden der zwei Bereiche:
ein Segment zu bestimmen, das einer anatomischen Struktur entspricht, die sowohl in dem Bereich als auch in dem zugehörigen weiteren Bereich enthalten ist, wobei sowohl der Bereich als auch der zugehörige weitere Bereich als Startpunkte für die Bestimmung des Segments verwendet werden.

10. System nach einem der vorangehenden Ansprüche, wobei der Satz von Befehlen, wenn er von dem Prozessor (102) ausgeführt wird, den Prozessor (102) außerdem veranlasst:
eine Benutzeroberfläche zu steuern, um das Bild, die Linie und die beiden Bereiche anzuzeigen;
die Perspektive des Bildes zu ändern; und
die Perspektive der Linie und der beiden Bereiche entsprechend der Änderung der Perspektive des Bildes ändern.

11. Computer-implementiertes Verfahren zum Segmentieren eines Bildes, das eine oder
mehrere anatomische Strukturen in Segmente umfasst, wobei das Verfahren Folgendes umfasst:
Empfangen (802) einer ersten Benutzereingabe, die eine Linie im Bild angibt;
Definieren (804) von zwei Bereichen im Bild, einer auf jeder Seite der angegebenen Linie, wobei jeder Bereich auf seiner jeweiligen Seite an die angegebene Linie auf seiner jeweiligen Seite anschließt; und
für jeden der zwei Bereiche:
Bestimmung (806) eines Segments, das einer anatomischen Struktur entspricht, die in dem Bereich enthalten ist, wobei der Bereich als Kern für die Bestimmung des Segments verwendet wird; wobei die Definition der beiden Bereiche in dem Bild **dadurch gekennzeichnet ist, dass** die Bereiche direkt auf beiden Seiten der angegebenen Linie platziert sind und auf ihren jeweiligen Seiten an diese anschließen.

12. Computerprogrammprodukt, das ein computerlesbares Medium umfasst, wobei das computerlesbare Medium einen darin verkörperten computerlesbaren Code aufweist, wobei der computerlesbare Code so konfiguriert ist, dass bei Ausführung durch einen geeigneten Computer oder Prozessor der Computer oder Prozessor veranlasst wird, das Verfahren nach Anspruch 11 durchzuführen.

## Revendications

1. Système (100) configuré pour segmenter une image contenant une ou plusieurs structures anatomiques segmentées, le système (100) comprenant:
mémoire (106) comprenant des données d'instruction représentant un ensemble d'instructions;
un processeur (102) configuré pour communiquer avec la mémoire (106) et pour exécuter l'ensemble d'instructions, dans lequel l'ensemble d'instructions, lorsqu'il est exécuté par le processeur (102), amène le processeur (102) à:
recevoir une première entrée utilisateur indiquant une ligne dans l'image;
définir deux régions dans l'image, une de chaque côté de la ligne indiquée, chaque région étant contiguë à la ligne indiquée sur son côté respectif; et
pour chacune des deux régions:
déterminer un segment correspondant à une structure anatomique comprise dans la région, en utilisant la région comme germe pour déterminer le segment;
dans lequel la définition des deux régions dans l'image est **caractérisée en ce que** les régions sont placées directement sur l'un ou l'autre côté de la ligne indiquée et en butée sur leurs côtés respectifs.

2. Système selon la revendication 1, dans lequel l'image comprend une pluralité de pixels ou de voxels et le fait d'amener le processeur à déterminer un segment correspondant à une structure anatomique comprend le fait d'amener le processeur à:
utiliser chaque pixel ou voxel dans la région ayant une valeur dans une plage prédéfinie comme point de départ pour déterminer le segment.

3. Système selon l'une quelconque des revendications précédentes, dans lequel le fait d'amener le processeur à déterminer un segment correspondant à la structure anatomique comprend le fait d'amener le processeur à:
déterminer le segment à l'aide d'un processus de segmentation par coupe de graphe.

4. Système selon l'une quelconque des revendications précédentes, dans lequel chaque région comprend une bande parallèle à la ligne, et dans lequel les bandes parallèles sont symétriques.

5. Système selon l'une quelconque des revendications précédentes, dans lequel le jeu d'instructions, lorsqu'il est exécuté par le processeur (102), amène en outre le processeur (102) à:
recevoir une deuxième entrée utilisateur indiquant un changement de largeur d'au moins une des régions; et
ajuster la largeur de l'au moins une région en fonction de la deuxième entrée utilisateur reçue.

6. Système selon la revendication 5, dans lequel la seconde entrée de l'utilisateur comprend un mouvement d'un actionneur ou un mouvement sur un écran tactile et la largeur de l'au moins une région est modifiée proportionnellement à l'amplitude du mouvement de l'actionneur ou du mouvement sur l'écran tactile.

7. Système selon l'une quelconque des revendications précédentes, dans lequel la première entrée utilisateur comprend les emplacements de deux ou plusieurs points sur l'image et l'ensemble d'instructions, lorsqu'il est exécuté par le processeur (102), amène le processeur (102) à:
déterminer une spline à travers les deux points ou plus; et
dans lequel le fait d'amener le processeur à définir deux régions dans l'image comprend le fait d'amener le processeur à:
définir deux régions dans l'image, une de chaque côté de la spline déterminée, dans laquelle les régions sont placées directement de chaque côté de la spline déterminée et en butée sur les côtés respectifs.

8. Système selon l'une quelconque des revendications précédentes, dans lequel la ligne comprend une pluralité de points de contrôle réglables ; et dans lequel le jeu d'instructions, lorsqu'il est exécuté par le processeur (102), amène en outre le processeur (102) à:
recevoir une troisième entrée utilisateur pour ajuster un ou plusieurs des points de contrôle réglables;
et mettre à jour la forme de la ligne sur la base de l'ajustement indiqué dans la troisième entrée utilisateur reçue.

9. Système selon l'une quelconque des revendications précédentes, dans lequel le jeu d'instructions, lorsqu'il est exécuté par le processeur (102), amène en outre le processeur (102) à:
recevoir une quatrième entrée utilisateur indiquant une autre ligne dans l'image;
définir deux autres régions dans l'image, une de chaque côté de l'autre ligne, chaque autre région étant contiguë à l'autre ligne sur son côté respectif;
associer chacune des deux régions à une autre région;
et pour chacune des deux régions:
déterminer un segment correspondant à une structure anatomique comprise à la fois dans la région et dans la région supplémentaire associée, en utilisant à la fois la région et la région supplémentaire associée comme points de départ pour déterminer le segment.

10. Système selon l'une quelconque des revendications précédentes, dans lequel le jeu d'instructions, lorsqu'il est exécuté par le processeur (102), amène en outre le processeur (102) à:
commander une interface utilisateur pour afficher l'image, la ligne et les deux régions;
modifier la perspective de l'image; et
changer la perspective de la ligne et des deux régions, en fonction du changement de perspective de l'image.

11. Procédé mis en oeuvre par ordinateur pour segmenter une image contenant une ou plusieurs structures anatomiques en segments, le procédé comprenant:
recevoir (802) une première entrée utilisateur indiquant une ligne dans l'image;
définir (804) deux régions dans l'image, une de chaque côté de la ligne indiquée, chaque région étant contiguë à la ligne indiquée sur son côté respectif; et
pour chacune des deux régions:
déterminer (806) un segment correspondant à une structure anatomique comprise dans la région, en utilisant la région comme germe pour déterminer le segment ; dans lequel la définition des deux régions dans l'image est **caractérisée en ce que** les régions sont placées directement de part et d'autre de la ligne indiquée et en butée contre celle-ci sur leurs côtés respectifs.

12. Produit de programme informatique comprenant un support lisible par ordinateur, le support lisible par ordinateur comportant un code lisible par ordinateur incorporé dans celui-ci, le code lisible par ordinateur étant configuré de telle sorte que, lors de l'exécution par un ordinateur ou un processeur approprié, l'ordinateur ou le processeur est amené à exécuter le procédé selon la revendication 11.
